# EUROPEAN PATENT APPLICATION

(11) **EP 3 153 399 A1**
(43) Date of publication of application: **12.04.2017**
(21) Application number: 15800580.1
(22) Date of filing: 27.05.2015
(51) Int. Cl.: B63B 35/44, F03D 13/25

(54) **FLOATING SUBSTRUCTURE FOR A WIND GENERATOR AND METHOD OF INSTALLING SAME**

(30) Priority: 27.05.2014 ES 201430794
(71) Applicant: Esteyco S.A.P., 28036 Madrid (ES); Sea Wind Towers S.L., 28036 Madrid (ES)
(72) Inventor: FERNÁNDEZ GÓMEZ, Miguel Ángel, E-20836 Madrid (ES); SERNA GARCÍA-CONDE, José, E-20836 Madrid (ES)
(74) Representative: Escudero Prieto, Nicolás Enrique
(86) International application number: PCT/ES2015/070416
(87) International publication number: WO 2015/181428

(57) **Abstract**

Floating construction comprising: a flotation base including at least one essentially hollow body selectively fillable with ballast, where the maximum horizontal dimension of the flotation base is greater than the maximum vertical dimension of the flotation base; a building supported by said flotation base, comprising preferably a telescopic tower; downward impelling means; and at least three retaining cables, the corresponding upper ends thereof being attached to said flotation base, preferably at peripheral positions of the flotation base, and the corresponding lower ends thereof being attached to said downward impelling means, such that said retaining cables are tensioned and exert on said flotation base a downward force that increases the stability of the floating construction. And the installation method for this floating construction.

## Description

### FIELD OF THE INVENTION

The present invention relates to a floating construction intended to be installed accordingly in a location on a body of water, a lake or the like, and a method for installing the same.

In particular, the construction of the present invention can be a floating substructure for a wind turbine, essentially made from concrete, which in an installed condition comprises either a semi-emerged shaft and a submerged flotation base, or an emerged shaft and a semi-submerged flotation base. In this context the term "substructure" refers to the part of a wind tower intended to support thereon the generation means of the wind tower, therefore including the tower itself or shaft.

For the sake of clarity in the description, the present document will refer in general to the use of a construction according to the present invention in the sea, without this limiting the scope of the invention with regard to the body of water or the location in accordance with the present invention. Similarly, for the sake of clarity in the description, the present document will specifically illustrate a floating substructure construction for a wind turbine, without this limiting the scope of the invention.

Although as indicated above this invention is particularly applicable for floating substructures for wind turbines essentially made from concrete, this should not be understood as limiting the scope of the description or the claims to the application of the subject matter in this type of construction, nor in substructures made essentially from concrete, as the present invention is equally advantageous for use in substructures which when installed have a bottom segment made mainly from concrete up to a certain height above the water level and mainly from another material (such as steel) above said height, and is also applicable although not preferable in substructures made of a material other than concrete (such as steel) in their entire vertical dimension.

Thus, the main field of application of the present invention is the large-scale structure construction industry, particularly with concrete, in combination with the industry of renewable or green power, specifically wind power.

### BACKGROUND OF THE INVENTION

It is well known that wind power has gained great relevance in recent years in Spain, Europe and the rest of the world. All forecasts point to a sustained growth in wind power generation worldwide. Energy policies of the most advanced and richest countries include among their goals an increased presence of wind power.

Within this context, offshore wind farms are beginning to appear, confirming the expectation of great growth in the use of this technology in coming years. Offshore wind farms clearly entail greater costs, depending of course on the depth of the water at their location, but the wind quality is better, wind speeds are higher and turbulence is lower, resulting in more production hours which, in addition to the higher density of air at sea level generates higher income than land-based wind farms, compensating for the higher initial investment costs. In fact, it is now common, particularly in Germany, Great Britain and Scandinavian countries to promote and build offshore wind farms, with a great number of such farms being studied, in line with the expected growth of this type of wind farms, closely linked to strategic goals set by governments for reaching specific renewable energy production quotas. The trend towards using turbines with greater power and size in order to reduce the unit costs of the installed power has been constant in the development of wind turbines, particularly so for offshore wind power. Nearly all large wind turbine manufacturers are studying or in the later stages of developing high power models, with 3 or more megawatts, adapted to marine conditions, which are particularly demanding.

This power escalation and the particularly demanding marine conditions in turn imply a considerable increase in the demands on the substructure that must support the turbines, which requires developing novel concepts for said substructure with increased capacity, optimum strength and a competitive cost, particularly if the substructure will be used in locations with great depth, which may be advisable in some circumstances. Floating solutions have been proposed for these sites, all of which have been built so far have used a metal substructure.

Among the main drawbacks and limitations of known floating solutions are the following:
- The installation of substructures implies high costs related to the scarce and costly marine means for transportation, handling and lifting of the foundation, shaft and turbine elements.
- Steel has a limited duration in the marine medium due to the aggressive conditions of humidity and salinity, particularly in tidal movement areas. Consequently, maintenance requirements are high and costly. Together with the high sensitivity of metal structures to fatigue loads, this means that the useful lifetime of the metal components of the substructure is limited.
- Steel substructures are highly sensitive to collisions from ships, icebergs and drifting objects in general.
- There are uncertainties resulting from the variability in the cost of steel, considerably greater than that for concrete.
- Certain existing solutions present a limited stiffness for the substructure shaft, which limits the capacity for greater heights of the substructure and size of the turbines, particularly with foundation solutions with a limited stiffness, with is the most common situation in off-shore installations.
- Great dependency on specific marine means for lifting and transportation, which are in limited supply.

With regard to the manufacturing material, structural concrete turns out to be an optimum material for constructions on water, particularly marine offshore constructions. In fact, although the use of metal structures is predominant in mobile floating elements, as an extension of naval practice and always linked to continuous maintenance, concrete is instead an advantageous alternative and is therefore more common in all types of fixed maritime constructions (ports, docks, breakwaters, platforms, lighthouses, etc.). This is mainly due to the durability, robustness and structural strength, reduced sensitivity to marine corrosion and practically maintenance-free service of structural concrete. With a proper design, fatigue sensitivity is also very low. Its useful lifetime generally exceeds 50 years.

Moreover, concrete is advantageous due to its tolerance in case of impact or collisions, and can be designed for example to withstand forces generated by drifting ice or the impact from small ships, as well as due to the simplicity and economy of any necessary repairs.

Structural concrete is also a universal construction material, and the raw material and construction means are accessible worldwide and have moderate costs.

For this reason, concrete is increasingly used to build offshore substructures, although until now it has been generally used for substructures with foundations on the seabed, and therefore for small depths or complex structures.

### SUMMARY OF THE INVENTION

One object of the present invention relates to a floating construction for a wind turbine comprising:
- a flotation base including at least one essentially hollow body selectively fillable with ballast, where the maximum horizontal dimension of the flotation base is greater than the maximum vertical dimension of the flotation base,
- a telescopic shaft, supported by said flotation base and comprising at least two segments, including a base segment and a head segment,
- downward impelling means, and
- at least three retaining cables, the corresponding upper ends thereof being attached to said flotation base, preferably at peripheral positions of the flotation base, and the corresponding lower ends thereof being attached to said downward impelling means, such that said retaining cables are taut and exert on said flotation base a downward force that increases the stability thereof.

Said shaft is formed from at least two tubular segments placed on each other coaxially, possibly with partial axial overlap, until reaching the planned height, of which at least one can be tapered in an upward direction in the installed condition of the substructure. Between two successive segments there is therefore a corresponding horizontal union. Among the shaft segments, the shaft segment intended to be placed directly on said flotation base in the installed condition of the substructure is hereinafter referred to as the "base segment" and any segment other than the base segment is hereinafter referred to as a "superposition segment". The superposition segment intended to be placed at the top of the shaft in the installed condition of the substructure is hereinafter referred to as the "head segment".

Each one of these segments can be a single piece (hereinafter referred to as an "integral segment"). Alternatively, at least one of said segments can be formed by at least two arched segments, joined to complete the circumference of the corresponding segment. Between two successive arched segments there is therefore a corresponding vertical union.

In addition, the base segment of a substructure shaft and the flotation base of said substructure can be joined continuously or be made from a single piece, without thereby departing from the scope of the invention.

Said floating substructure for a wind turbine, in an installed condition comprises either a semi-emerged shaft and a submerged flotation base, or an emerged shaft and a semi-submerged flotation base. In this regard, in the present invention it is considered that the part of the wind tower at a lower height than the maximum height of any component of the flotation base forms part of said flotation base.

The floating construction in accordance with the present invention can also comprise a stay the upper end of which is joined to the building, preferably a shaft, and the lower end of which is joined to the flotation base. At least one of said stays is inclined such that the lower end of the stay is farther from the central vertical axis of the building than the upper end of the stay. At least one of said stays can be formed by the extension of a corresponding retaining cable, in which case the flotation base comprises a deflection element that allows creating an elbow in the alignment of the retaining cable and the upper end of the retaining cable is finally joined to the building.

The flotation base can be a structure that comprises a single body, essentially closed, sealed and hollow, in the form of a box, that is preferably made from concrete, or can be a structure comprising at least two essentially closed bodies, sealed and hollow, in the form of a box, of which at least one is preferably made substantially from concrete, said bodies joined to each other directly or through a structure such as a lattice or bar structure. Each of said bodies can have one or several inner compartments, sealed or in communication with each other.

A floating construction in accordance with the present invention can be transported over water by towing or self-propulsion to the final location. For this purpose, the flotation base and at least part of the building can form a transportation unit that is floating and free standing. In the case of a floating construction that is a floating substructure for a wind turbine comprising a telescopic shaft according to the present invention, the flotation base, the telescopic shaft in its retracted condition (that is, with the base segment integrally joined to the flotation base and the superposition segments provisionally housed inside each other and inside the base segment), and at least part of the turbine means joined to the head segment of said telescopic segment, can form a transportation unit that is floating and free standing. The telescopic shaft in its retracted condition allows lowering the centre of gravity of the transportation unit and thereby improving its stability.

Preferably, during transportation the flotation base remains semi-submerged and the building, including if applicable the telescopic shaft in its retracted position, remains completely emerged. However, in the installed condition of the substructure, the flotation base is preferably completely submerged and the building is partially submerged.

In the installed condition of the construction, the central vertical axis of the building coincides with the central vertical axis of the flotation base.

For their part, said downward impelling means may comprise attachment means to the seabed such as driven piles, anchored micropiles, anchored bulbs of hardening material or anchored suction buckets, or other elements or combination of elements known in the art to generate a connection with the seabed and which can resist the upward force transmitted to them by the retaining cables. Said downward impelling means may also comprise attachment means to the seabed such as gravity systems based on the use of one or more massive elements arranged on the seabed that can resist, due to their own weight, at least part of the upward force applied on them by the retaining cables. In this case, at least one of said massive elements may comprise a concrete box, essentially hollow, the interior of which in the installed condition is completely or partially filled with ballast material, which can be a liquid or solid material. Said concrete box can be self-buoyant and free-standing in its unballasted condition, such that it can be towed to the location and ballasted on site to submerge it until it rests on the seabed.

The retaining cables, once joined to said flotation base and to said downward impelling means, can be vertical and thus parallel to one another, or they can also have a certain inclination to the vertical, for better resistance and rigidity to possible horizontal forces that they may be subjected to.

The construction according to this invention may also comprise lateral means for maintaining the position that join the floating construction to the seabed, thereby preventing the construction from drifting. Such lateral means for maintaining the position may comprise at least one mooring attached on one end to the seabed and on the other end to any element of the floating construction. The attachment of said mooring to the seabed can be performed by various systems known in the art, such as anchors, single point mooring or simply by gravity if there are a plurality of moorings of great size and length.

At least one of said massive elements can be provisionally abutted to the flotation base. Thus at least one of said abutting massive elements can form part of the transportation unit and be transported together with the flotation base and the building, and once at the site released or separated from the flotation base until reaching its position in the installed condition of the construction.

The floating construction according to the present invention can comprise means for provisional collection of the retaining cables to transport them wound or in reels, forming part of the transportation unit and/or part of at least one massive element. Said elements allow efficient transportation of the retaining cables, such that during the installation of said cable it can be wound or unwound gradually, improving the efficiency and simplicity of the installation process, especially when the downward impelling means comprise massive elements which are ballasted for gradual descent until reaching the installed condition of the floating construction.

In addition, the flotation base of a floating construction according to the present invention can comprise at least one extensor arm that extends laterally outward from the perimeter of the body or group of bodies of the flotation base. In this case, at least one of the retaining cables can be attached at its upper end to a corresponding extensor arm, preferably to the free end of a corresponding extensor arm. In this case, at least one of the stays can be attached at its lower end to a corresponding extensor arm. Also in this case, at least one of said stays can be formed by the extension of a corresponding retaining cable, in which case the extensor arm comprises, preferably at its free end, a deflection element that allows creating an elbow in the alignment of the retaining cable and the upper end of the retaining cable is finally joined to the building. Also in this case the lateral means for maintaining the position can be attached on one end to the seabed, and on the other end to at least one of said extensor means.

The floating construction according to the present invention can include under the flotation base at least one chamber with pressurised gas (for example, pressurised air) that increases the volume of water displaced by the flotation base and therefore increases the upward buoyancy force exerted on it. The enclosure containing said pressurised gas chamber is open on the bottom such that it is connected to the body of water of the site. In addition, means for controlling and adjusting the volume and/or pressure of the air contained in said pressurised gas chamber can be provided, allowing to regulate the upward buoyancy force on the flotation base and in this way regulate the tension in the retaining cables, adapting it as required particularly in view of the wind or wave conditions.

Moreover, in this case the floating construction in accordance with the present invention can include on the flotation base means for harnessing energy from waves, which include at least one Wells type turbine on an air passage through the bottom side of the flotation base, communicating the essentially sealed internal enclosure of the flotation base and/or the building with said pressurised gas chamber. Furthermore, the floating construction in accordance with the present invention can comprise a system for regulating the size of at least one pressurised gas chamber by adjusting the volume and/or pressure of the air contained therein, which allows adjusting the resonant frequency in said pressurised gas chamber to the predominant period ranges in the incident waves, thereby increasing the oscillations of the water level in said pressurised gas chambers caused by the waves and the energy harnessing thereof.

Said Wells type turbines allow harnessing the energy from waves by the method known as oscillating water column; the waves produce rises and falls in the water sheet inside the enclosure containing the pressurised gas chamber, thereby propelling air through the passage between the gas chamber under the flotation base and the inside of the base of the flotation chamber or the shaft. The Wells type turbine can generate energy using the air flow through said passage in either direction.

Although the Wells turbine is the preferred type, other types of turbines known in the art can be used to harness the energy from a moving fluid without thereby departing from the scope of the invention.

Another object of the present invention relates to a method for installing a floating construction as described above.

The installation method according to the present invention comprises the following steps, in any order technically possible:
A) manufacturing the flotation base on-shore or in-shore,
B) dry manufacturing the telescopic shaft, including at least one base segment and one head segment,
C) forming a transport unit on-shore or in-shore according to the following sub-steps:
   C1) attaching the telescopic shaft in retracted condition to the flotation base,
   C2) attaching at least part of the wind turbine means to the head segment,
   C3) attaching the extensor arms, if applicable, to the flotation base,
   C4) attaching the stays, if applicable, to the flotation base,
   C5) attaching the wave energy harness means, if applicable, to the flotation base,
D) transporting the transport unit in a self-buoyant manner, either by using tug boats or by self-propulsion, to the site,
E) attaching one end of the retaining cables to the flotation base and attaching the other end of the retaining cables to the downward impelling means,
F) attaching to the substructure, if applicable, the means for maintaining the lateral position,
G) extending the telescopic shaft together with the wind turbine means.

The wind turbine means (step C2) are preferably attached before step D) self-buoyant transport and before step G) extension of the telescopic shaft, but they may be attached at a different time without thereby departing from the scope of the present invention.

Step E) may be carried out at different phases, which may also be alternated with other steps of the installation method. Thus, for example, the retaining cables can be fastened at one end to the attachment means to the seabed in advance and before step D), and by the other end to the flotation base after step D). Alternatively, the retaining cables can be fastened on one end to the flotation base before step D) and by the other end to the attachment means to the seabed after step D).

The installation method according to the present invention also comprises before step D) the following step:
H) placing the flotation base on the body of water at the site.

The installation method according to this invention may also comprise, after step D) and before completing step E), the step:
I) ballasting the flotation base to submerge it to the desired depth for the installed condition, which preferably coincides with the depth at the installed condition of the top end of at least one of the retaining cables.

Once step E) has been completed, the flotation base shall reduce its ballast, thus increasing the buoyant force it receives and therefore the tension applied on the retaining cables.

The installation method according to this invention may also comprise, after step C) and before step E), the step:
J1) provisionally attaching flotation stabiliser means to the floating construction;
in which case the installation method according to the present invention can also comprise after step E) the following step:
J2) removing the flotation stabiliser means from the floating substructure.

Said flotation stabiliser means may include:
- at least three floats applied to the flotation base, possible by said extensor arms if present, at a relatively fixed position, each float being sufficiently high to remain always partially emerged during step I) and until step E) is completed, and/or
- at least two floats connected to the flotation base, possibly by said extensor arms if present, by launching means that are extended as the depth of the flotation base descends during step I) and/or by guiding means for the assembly of the floats with the building, each float having a buoyancy such that it remains at the surface throughout step I), and/or
- at least two floats connected to the flotation base and/or the telescopic shaft by sliding or guiding elements, such that they allow the shaft to slide during the ballasting and/or descent of the flotation base while the floats remain at the surface, and/or
- at least one barge connected to the flotation base, possibly by said extensor arms if present, by launching means that are extended as the depth of the flotation base descends during step I), each barge having a buoyancy such that it remains at the surface throughout step I), and/or
- at least one support vessel equipped with launching means that attach the vessel to the flotation base, possibly by said extensor arms if present.

The controlled ballasting procedure for the flotation base that uses the auxiliary floatation means described herein can also be used for the ballasting procedure for platforms intended to rest on the seabed in their installed condition, according to this invention.

The installation method according to the present invention can also comprise before step E) the following steps:
K1) manufacturing on-shore or in-shore at least one concrete box with the downward impelling means and placing it in the body of water of the site,
K2) transporting said concrete box in a self-buoyant manner, using tug boats, to the site,
K3) ballasting said concrete box such that its total weight increases enough to offset the upward forces that may be transmitted by the retaining cables and such that it is submerged to its operational depth.

The installation method according to the present invention can also comprise before step E) the following step:
M) placing on the flotation base traction means for the retaining cables;
such that the installation method according to the present invention can also comprise in step E): actuating said traction means for the retaining cables to vertically move the flotation base.

In at least one of said steps of the installation method according to the present invention, one or more tug boats can be used to control the surface position of the floating substructure.

Optionally, step G) of the installation method according to the present invention is divided into two or more steps, including one or more stages after step D) and before step E) and one or more stages after step E).

Similarly, step D) of the installation method according to the present invention is preferably divided into two or more steps, including:
- a transportation stage without impelling means, previous to step E), to a working area different from the site, and
- a transportation stage with impelling means, after step E), from said working area to the site.

Finally, if step C2) includes installation on the head segment of only one part of the wind turbine means, the method also comprises after step D) the following step:
N) assembling on the head segment all the wind turbine means.

It must be noted that, by using a special type of substructure designed to provide solutions for a supporting substructure for large capacity turbines, the present invention allows providing a repowerable substructure. That is, a substructure originally designed with an increased capacity and adaptability to allow repowering (subsequent replacement of the original turbine by a new turbine with greater power, efficiency and profitability) using the same substructure.

It must also be noted that the installation method according to the present invention as described above is reversible. That is, the steps performed can be executed in the opposite order to dismantle the construction, in order to remove it completely or to perform work of any type on the structure in port and reinstall it. In addition, when the floating construction is a floating substructure for a wind turbine, the telescopic shaft can be configured to return to the retracted condition at any time of the useful lifetime of the substructure, such as for maintenance actions or for repowering.

The present invention therefore provides a floating construction and a method for installing the same that are advantageous for great depths, particularly applicable to constructions made essentially from concrete and with little or no dependence on great maritime means for transporting, handling and hoisting the construction elements, consequently implying a low or null cost associated to said means.

The flotation base according to the present invention can be considered to be analogous to the foundation block of a gravity foundation solution resting on the seabed. However, it is possible to make the flotation base of the present invention with a less complex design if it is not ballasted, as this allows preventing valve mountings for such purpose. Even if it is ballasted, the external and internal pressure differences on the walls of the flotation base are less than those withstood in case of ballasting to the seabed. In addition, the flotation base of the present invention requires a less bulky structure since the efficacy of the gravity foundations with respect to stabilisation are closely linked to their weight, which is normally solved by using large volumes heavily ballasted that must be able to withstand the transmission of high forces to the seabed. These features can allow keeping costs relatively low.

In short, the present invention provides a floating construction and a method for installing the same in offshore waters that are advantageous for great depths, are relatively simple, efficient, safe and economical, both for installation and maintenance, and/or, in the case of floating substructures for wind turbines, repowering.

### BRIEF DESCRIPTION OF THE DRAWINGS

These and other features and advantages of the present invention will become apparent in view of the following non-limiting description of an embodiment of the invention, made with reference to the accompanying drawings, where:
Figure 1 shows a schematic plan view with a partial cross-section of a transportation unit with a shaft in the retracted condition, with wind turbine means;
Figure 2 shows a schematic plan view with a partial cross-section of a floating substructure attached to the seabed using cables and piles, with wind turbine means;
Figure 3 shows a schematic plan view with a partial cross-section of a floating substructure attached to the seabed using cables and massive elements, with extensor arms, with wind turbine means;
Figure 4 shows a schematic plan view with a partial cross-section of a floating substructure attached to the seabed using cables and a massive element, with wind turbine means;
Figure 5 shows a schematic plan view with a partial cross-section of a floating substructure attached to the seabed using cables and piles, with extensor arms and stays, with wind turbine means;
Figure 6 shows five schematic plan views with partial cross-sections representing respective embodiments that include different stabilisation means used during the installation method;
Figure 7 shows two schematic plan views with partial cross-sections representing respective embodiment stages with stabilisation means used during the installation method;
Figure 8 shows three schematic plan views with a partial cross-section of respective steps in an installation method for a floating substructure attached to the seabed using cables and a massive element, with wind turbine means;
Figure 9 shows a schematic perspective view of a floating substructure attached to the seabed using cables and piles, with a floating substructure having several bodies, with a non-telescopic shaft and wind turbine means;
Figure 10 shows a schematic perspective view of a floating substructure attached to the seabed using cables and piles, with another floating substructure having several bodies and with stays, with wind turbine means; and
Figure 11 shows a schematic view of a portion of a floating substructure, specifically a flotation base that includes a pressurised gas chamber and Wells type turbines, as well as extensor arms.

### DETAILED DESCRIPTION OF AT LEAST ONE EMBODIMENT OF THE INVENTION

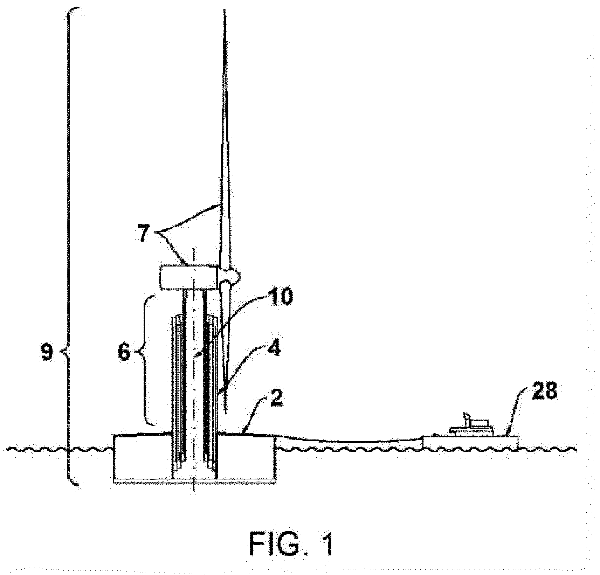

With reference to the accompanying figures, all of which show a floating construction which, in installed condition, according to the present invention, comprises: a floating base 2, which includes at least one body with an essentially hollow enclosure 25, the maximum horizontal dimension of which is greater than its maximum vertical dimension; a building supported by said flotation base 2; downward impelling means; and at least three retaining cables 8 the corresponding upper ends of which are joined to said flotation base 2 and the corresponding lower ends of which are joined to said downward impelling means: In addition, in figures 1-8, 10 and 11 the building that forms part of the floating construction comprises a telescopic shaft 3 where the wind turbine means 7 shown are an accessory that is optional and/or interchangeable with other accessories, depending on the use of the floating construction, illustrated only by way of example to describe the embodiments of the invention. In the case of figures 1 to 11, the flotation base 2 has dimensions allowing to ensure the stable self-buoyancy of the assembly comprising the flotation base 2 itself, the telescopic shaft 3 in retracted condition and at least part of the wind turbine means 7 placed on the head of said shaft.

However, figures 1, 6 and 7 show floating substructures in which said downward impelling means and said retaining cables 6 have not been attached to form the complete floating substructure 7 according to the invention, since it shows stages of the installation method for the floating substructure 1 are shown previous to the installed condition.

Specifically, figure 1 shows a transport unit 9 in a transportation stage of an embodiment of the installation method according to the present invention, where a self-buoyant and free-standing transport unit 9, formed by a floating base 2, a telescopic shaft 3 in folded condition supported by said flotation base 2, and wind turbine means 7 joined to the head segment 32 of said telescopic shaft 3 is towed by a tug boat 28. In the transportation stage shown in figure 1, the downward impelling means and the retaining cables 8 are transported separately from said transport unit 9 and attached subsequently to the transport unit 9.

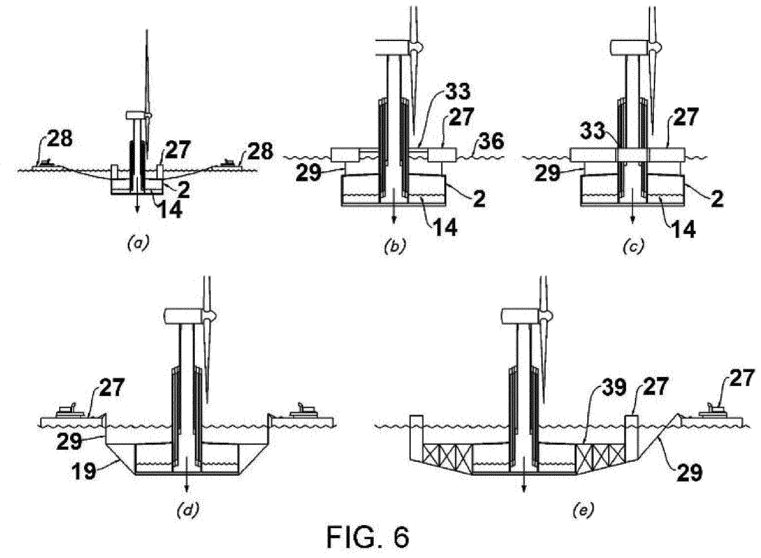

Figure 6 shows a transport unit 9 in a descending condition corresponding to an embodiment of the installation method according to this invention, in particular during the step of ballasting the flotation base 2 just before applying precisely retaining cables 8 connected by their lower end to downward impelling means. Figure 6 shows five views representing respective embodiments of stabilisation means 27 used in the installation method. Such stabilisation means 27 are intended for stabilising the transport unit 9 during the tasks of applying the downward impelling means and the retaining cables 8 to the transport unit 9, as well as during the ballasting and descent of the flotation base 2 to its operating depth. These stabilisation means 27 are optional in the installation method and, in any case, are preferably detachable and reusable such that they are not part of the floating substructure 1 in its installed condition.

More specifically, in the embodiment shown in view 6(a), the stabilisation means 27 comprise three floats attached to the flotation base 2 at a relatively fixed position, each float having sufficient height to remain always partially emerged throughout the step of ballasting and descent of the floating substructure 1 to its operating depth. In this embodiment, two tug boats would be connected to the flotation base 2 of the floating substructure 1 at diametrically opposite points, to increase control in the positioning of the floating substructure 1.

In the embodiment shown in view 6(b), the stabilisation means 27 comprise three floats connected to one another and comprising guiding means 33 with the shaft that maintain their relative plan position with the flotation base 2 (the drawing only shows two floats due to the type of view used), each float having a motorised reel comprising launching means 29; in this case said launching means 29 consist in a rope attached at its free end to the flotation base 2, such that said motorised reel pays out rope during the ballasting and descent of the floating substructure 1 to its operating depth. Said rope is pre-stressed.

In the embodiment shown in view 6(c), the stabilisation means 27 comprise a single float partially surrounding the base section 4, the float having a U-shaped geometry in plan view, and comprising traction means 31, which in this case consist in three motorised reels, each of which comprise a rope attached at its free end to the flotation base 2, such that each one of said motorised reels pays out rope until the floating substructure 1 is ballasted and descends to its operational depth.

In the embodiment shown in view 6(d), the stabilisation means 27 comprise two barges or vessels that have a motorised reel each comprising a rope attached at its free end to the flotation base 2 (in this embodiment, in particular to a respective extensor arm 19) such that said motorised reel pays out rope as the floating substructure 1 is ballasted and descends to its operational depth.

Finally, in the embodiment shown in view 6(e), the stabilisation means 27 comprise three floats (although the cross sectional view only shows two) connected to the flotation base 2 via extensor arms 39 which in this case are provisional, and also comprise support vessels 27 provided with launching means 29. In this case, the floats remain emerged during part of the ballasting procedure for the flotation base 2 from but not in the final stages of the ballasting procedure.

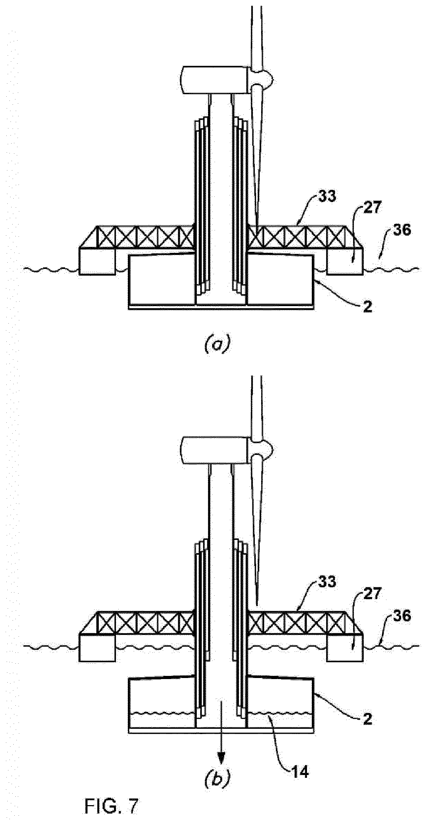

Figure 7 shows a transport unit 9 in a descending condition corresponding to an embodiment of the installation method according to this invention, in particular during the step of ballasting the flotation base 2 just before applying precisely retaining cables 8 connected by their lower end to downward impelling means. Figure 7 shows two views representing respective embodiment stages of stabilisation means 27 used in the installation method. Such stabilisation means 27 are intended for stabilising the transport unit 9 during the tasks of applying the downward impelling means and the retaining cables 8 to the transport unit 9, as well as during the ballasting and descent of the flotation base 2 to its operating depth. These stabilisation means 27 are optional in the installation method and, in any case, are preferably detachable and reusable such that they are not part of the floating substructure 1 in its installed condition.

In the embodiment shown in view 7(a), the stabilisation means 27 comprise three floats that are connected to one another and comprise sliding or guiding means 33, such that they allow the shaft to slide during the ballasting and/or descent of the flotation base 2 while the floats 27 remain at the surface (the drawing only shows two floats due to the type of view used). In this embodiment stage the flotation base 2 is semi-submerged during the transport operation.

The embodiment shown in view 7(b), shows a subsequent embodiment stage, wherein the flotation base 2 is submerged, while the floats 27 remain at the surface, such that the shaft slides during the ballasting and/or descent of the flotation base 2.

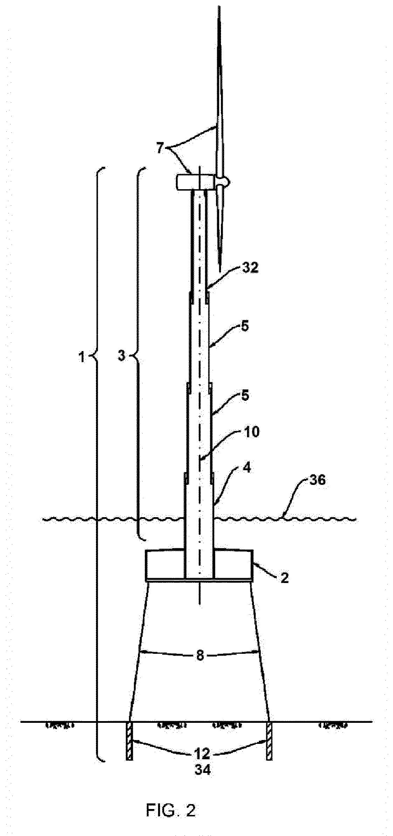

Reference will now be made to figures 2 to 5, each one of which shows a different embodiment of a floating substructure 1 according to the invention.

Figure 2 shows wind turbine means 7 supported by an extended telescopic shaft 3 formed by four tubular segments, that is, a base segment 4 and three superposition segments 5, 32, of which one is the head segment. In turn, the telescopic shaft 3 rests by its base segment 4 on a flotation base 2. In this embodiment the shaft is semi-emerged and the flotation base 2 is submerged, together forming part of a floating substructure 1 for a wind turbine. From the peripheral area of said flotation base 2 emerge three retaining cables 8 (of which only two are visible due to the view shown). These retaining cables 8 are attached by their end opposite the end attached to the flotation base 2 to downward impelling means that consist in attachment means to the seabed which, in this embodiment, are driven piles 12, anchored to the seabed. Said cables extend between the flotation base 2 and the corresponding pile adopting a certain inclination to improve their behaviour regarding horizontal actions that may act upon the floating substructure 1. In this embodiment, the flotation base 2 has different compartments that may be ballasted differentially, allowing to generate a non-uniform distribution of the ballast that counteracts, at least partially, external actions such as waves, sea currents, etc. The ballast material 14 can be a liquid material, a solid material or a mixture of both.

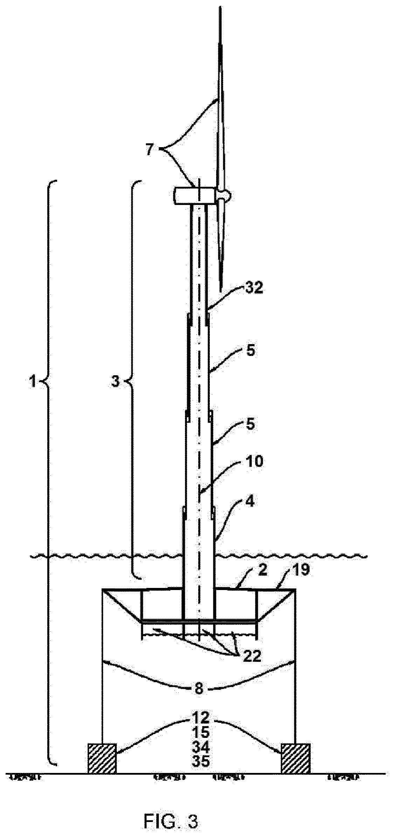

Figure 3 shows wind turbine means 7 supported by an extended telescopic shaft 3 formed by four tubular segments, that is, a base segment 4 and three superposition segments 5, 32. In turn, the telescopic shaft 3 rests by its base segment 4 on a flotation base 2. In this embodiment the shaft is semi-emerged and the flotation base 2 is submerged, together forming part of a floating substructure 1 for a wind turbine. From the peripheral area of said flotation base 2 emerge three retaining cables 8 (of which only two are visible due to the view shown). Specifically, in this embodiment the flotation base 2 comprises three extensor arms 19 that extend laterally out of said flotation base 2 and from each of said extensor arms 19 leaves a corresponding retaining cable 8. These retaining cables 8 are attached by their end opposite the end attached to the flotation base 2 to downward impelling means that consist in attachment means to the seabed which, in this embodiment, are massive elements resting on the seabed for each cable, in the form of hollow concrete boxes 34. The interior of the boxes 34 is filled with ballast material 14, by which said boxes 34 are anchored to the seabed by gravity. Said cables extend vertically between the flotation base 2 and the corresponding box 34. The flotation base 2 also includes a pressurised gas chamber 22 that is explained in more detail below. In this embodiment, the flotation base 2 is not ballasted.

In this embodiment, the cables may be arranged at an angle to the vertical such that the lower end of each cable is farther from the central vertical axis 10 of the shaft than the upper end of the same cable, without thereby departing from the scope of the invention.

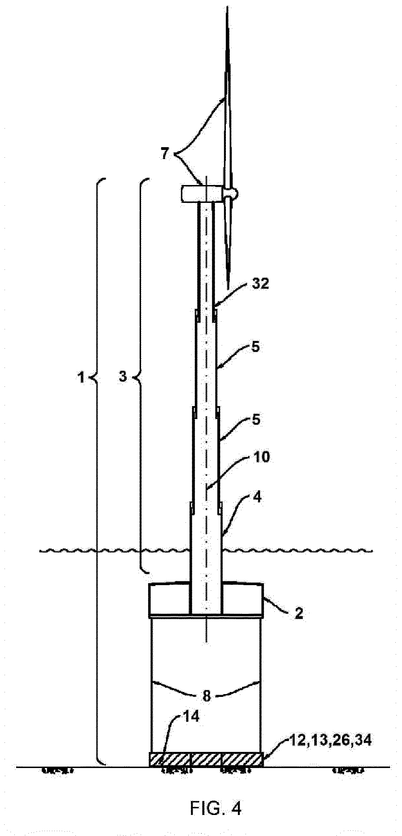

Figure 4 shows wind turbine means 7 supported by an extended telescopic shaft 3 formed by four tubular segments, that is, a base segment 4 and three superposition segments 5, 32. In turn, the telescopic shaft 3 rests by its base segment 4 on a flotation base 2. In this embodiment the shaft is semi-emerged and the flotation base 2 is submerged, together forming part of a floating substructure 1 for a wind turbine. From the peripheral area of said flotation base 2 emerge three retaining cables 8 (of which only two are visible due to the view shown). These retaining cables 8 are attached by their end opposite the end attached to the flotation base 2 to downward impelling means that consist in attachment means to the seabed which, in this embodiment, comprise a massive element resting on the seabed, in the form of a hollow concrete box 34 common to all cables. The interior of the common box 34 is filled with ballast material 14, by which said common box 34 is anchored to the seabed by gravity. Said cables extend vertically between the flotation base 2 and said common box 34. In this embodiment, the flotation base 2 is ballasted, allowing to generate a non-uniform distribution of the ballast that counteracts, at least partially, external actions such as waves, sea currents, etc.

In this embodiment, the cables may be arranged at an angle to the vertical such that the lower end of each cable is farther from the central vertical axis 10 of the shaft than the upper end of the same cable, without thereby departing from the scope of the invention.

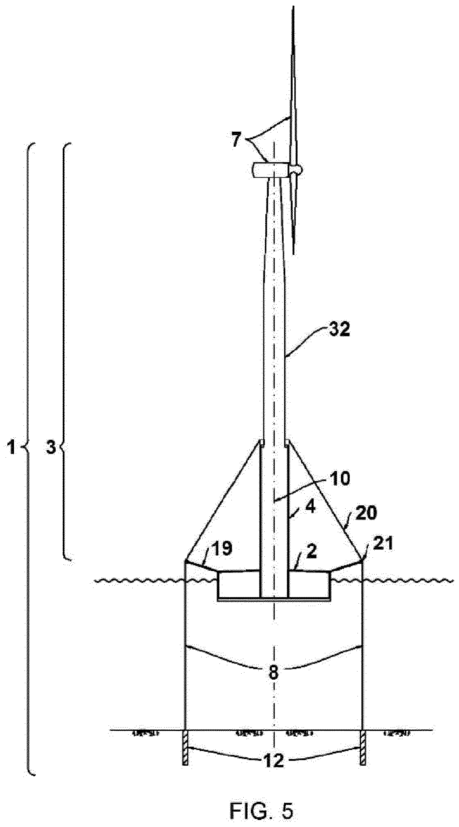

Figure 5 represents wind turbine means 7 supported on an extended telescopic shaft 3 formed by two tubular segments, a base segment 4 in this case made from concrete and a head segment 32, in this case metallic. In turn, the telescopic shaft 3 rests by its base segment 4 on a flotation base 2. In this embodiment the shaft is emerged and the flotation base 2 is semi-submerged, together forming part of a floating substructure 1 for a wind turbine. From the peripheral area of said flotation base 2 emerge three retaining cables 8 (of which only two are visible due to the view shown). Specifically, in this embodiment the flotation base 2 comprises three extensor arms 19 that extend laterally out of said flotation base 2 and from each of said extensor arms 19 leaves a corresponding retaining cable 8. These retaining cables 8 are attached by their end opposite the end attached to the flotation base 2 to downward impelling means that consist in attachment means to the seabed which, in this embodiment, are driven piles 12, anchored to the seabed. Said cables extend vertically between the flotation base 2 and the corresponding pile. In this embodiment, the flotation base 2 is not ballasted.

In addition, the floating substructure 1 includes three stays 20, each of which starts at a corresponding extensor arm 19 and is joined by its other end to the upper end of the base segment 4 of the shaft of the floating substructure 1. In fact, in this embodiment three strands are provided, each of which is attached on one end to its corresponding pile 12 and on the other end to the upper end of the base segment 4 of the shaft of the floating substructure 1. Each of said strands passes through a deflection element 21 placed at the free end of a respective extensor arm 19, such that each strand is divided into a bottom segment reaching from an extensor arm 19 to the corresponding pile 12 and an upper segment that extends from an extensor arm 19 to the upper end of the base segment 4 of the shaft of the floating substructure 1. Then each of said lower segments forms each of said retaining cables 8, and each of said upper segments forms each one of said stays 20. Said deviation element 21 in this embodiment is a plastic element with a curved face that allows the cable to deflect, adopting a suitable bending radius.

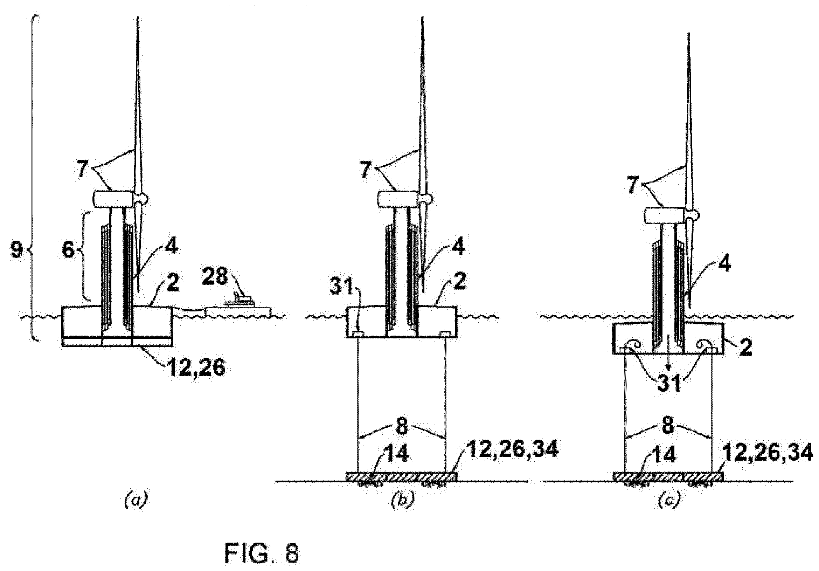

With reference to Figure 8, it shows intermediate stages of the installation method of the embodiment of figure 4 figure 8(a) shows a transport unit 9 in a transportation stage, where a self-buoyant and free-standing transport unit 9, formed by a floating base 2, a telescopic shaft 3 in folded condition supported by said flotation base 2, and wind turbine means 7 joined to the head segment 32 of said telescopic shaft 3 is towed by a tug boat 28. In this embodiment, the downward impelling means comprise attachment means to the seabed consisting in a abuttable massive element intended to rest on the seabed, in the form of a hollow concrete box 34 common to all cables, the plan view of which coincides substantially with the plan of the flotation base 2. In this transport stage, said common box 34 is abutted on the lower flat surface of said transport unit 9 and is transported together with it. Said common box 34 is abutted to the flotation base 2 in this transport stage via the retaining cables 8 or via any known fastening means which can be released once this transport stage is completed.

In fact, once the transport stage illustrated in view 8(a) is completed and prior to the moored condition illustrated in view 8(b), the common box 34 is ballasted so that it descends until resting on the seabed, at the same time as the retaining cables 8 that attach said common box 34 to the flotation base 2 are paid out.

View 8(b) then shows the transport unit 9 with the abuttable massive element in its moored and ballasted condition, where the retaining cables 8 are totally paid out and the common box 34 is resting on the seabed, and the flotation base 2 is substantially floating at the surface of the water.

After this and before the installed condition illustrated in view 8(c), traction means 31 for the retaining cables 8 are used that haul in a predetermined amount of cable, which causes the descent of the flotation base 2 to its operating depth since the ballasted common box 34 remains anchored to the seabed due to its weight. Said traction means 31 are in this case heavy-lift strand jacks that are operated from accessible cabins inside the flotation base 2.

The view 8(c) thus shows the floating substructure 1 according to this invention in said installed condition, where the cables are paid out in the precise measure so that the flotation base 2 is located at its operating depth, and the common box 34 rests on the seabed. In this case the shaft of the floating substructure 1 is semi-emerged and the flotation base 2 is submerged.

Said traction means 31 can already be applied initially to the floating substructure 1 and optionally be used to pay out the retaining cable 8 during the ballasting stage for the common abuttable box 34. Similarly, said cables can already be applied initially to the common box 34 and be collected during the transport stage via cable collection means 30.

In the embodiment according to the invention of figure 8, the massive element, abutting or transported independently, provides the required stability through the retaining cables 8 during the ballasting process of the flotation base 2, even if the flotation base 2 is fully submerged. For this reason, the installation process can be performed without having to use flotation stabilisation means 27.

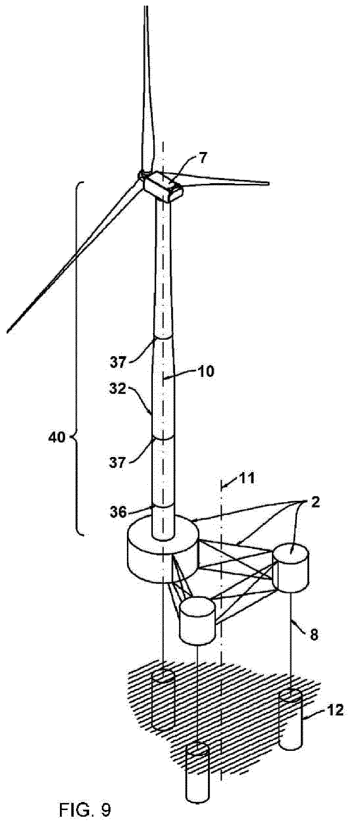

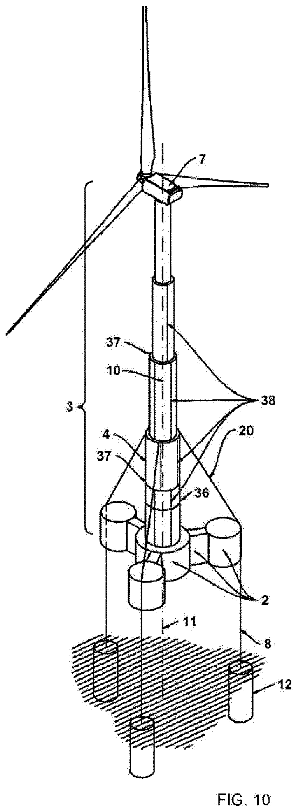

Figures 9 and 10 show corresponding embodiments of a floating substructure 1 for a wind turbine according to the present invention, in which the flotation base 2 is formed by a plurality of hollow bodies. Specifically, figure 9 shows an embodiment of a floating substructure 1 for a wind turbine according to the present invention in which the flotation base 2 is formed by a main hollow body and two additional hollow bodies, all hollow bodies joined to each other by lattice type structures; and figure 10 shows an embodiment of the floating structure 1 for a wind turbine according to the present invention in which the flotation base 2 is formed by a main hollow body and three additional hollow bodies, each one of the additional hollow bodies being joined to the main hollow body by a bar type structure which in this case is also formed by a prismatic hollow body.

In the embodiment of figure 9, the main hollow body is disc shaped and supports on it a non-telescopic tubular shaft 40 which in turn supports the wind turbine means 7, and the additional hollow bodies are arranged such that they form a triangular layout with the main hollow body. In this embodiment, the retaining cables 8 each emerge one from each hollow body and are attached by their end opposite the end attached to the flotation base 2 to downward impelling means that consist in attachment means to the seabed which, in this embodiment, are driven piles 12, anchored to the seabed.

In turn, in the embodiment of figure 10 the main hollow body is disc shaped and supports the shaft of the floating substructure 1, and the additional hollow bodies are arranged around said main hollow body at positions equidistant to each other and to said main body. In this embodiment, the retaining cables 8 each emerge one from each one of the additional hollow bodies and are attached by their end opposite the end attached to the flotation base 2 to downward impelling means that consist in attachment means to the seabed which, in this embodiment, are driven piles 12, anchored to the seabed.

The floating substructure 1 of this embodiment also comprises three stays 20, each of which arise from each one of the additional hollow bodies and are joined to the upper end of the base segment 4 of the shaft of the floating substructure 1. Preferably the lower end of a stay 20 of a floating construction according to the present invention will be joined to the flotation base 2 of the floating structure at a position close to or aligned with the point of union of the upper end of one of the retaining cables 8 to the flotation base 2.

In this embodiment the segments of the telescopic shaft 3 are formed by prefabricated half-segments which, joined at vertical joints 38, form essentially cylindrical segments of the shaft. Similarly, formed between said cylindrical segments are horizontal joints 37 along the shaft.

The tower segments formed by half-segments can be preassembled in dry dock and/or in port to form full segments, and then the full segments attached to the flotation base 2, as an intermediate step also applicable to other offshore substructures that use telescopic towers such as that described in the present invention.

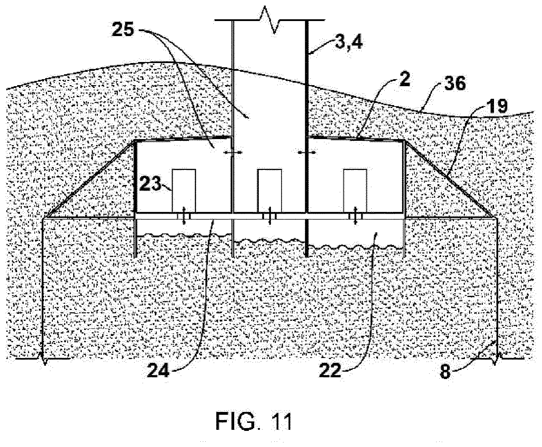

Lastly, figure 11 shows a detailed view of an embodiment of a floating substructure 1 according to the present invention, specifically a flotation base 2 with extensor arms 19 that includes a pressurised gas chamber 22 and Wells type turbine 23 to harness wave power and which correspond to the gas chamber 22 of the embodiment in figure 3.

More specifically, the peripheral wall of the flotation base 2 is extended downward such that a cavity facing downward is defined. This cavity initially contains air which is trapped when the flotation base 2 is placed in the body of water of the site. In addition when the flotation base 2 is submerged said trapped air is compressed, forming said pressurised gas chamber 22. Alternatively or additionally, air or any other pressurised gas can be introduced in said pressurised gas chamber 22. In addition, the flotation base 2 is compartmentalised. Each compartment has an opening in the end wall and, in corresponding with each such opening, a Wells type turbine 23. In addition, the compartments also have an opening in each partition wall between compartments. The partitions between compartments also extend downward such that said pressurised gas chamber 22 is also compartmentalised.

The power generation system of a Wells type turbine 23 is based on the OWC (oscillating water column) technology, which relies on the pressure changes generated by waves on the air chamber 22 that drive air through the Wells type turbines 23.

The presence of Wells type turbines 23 in the embodiments of the present invention to generate power from waves in which the floating construction is a floating substructure 1 for a wind turbine is particularly appropriate as all the infrastructure provided for evacuating the power generated by the wind turbine is already present.

In addition, the pressurised gas chamber 22 can comprise means for controlling and regulating the volume and/or pressure of the gas contained in said pressurised gas chamber 22, in order to regulate or help regulate the depth of the floating substructure 1 and to adjust or help adjust the resonant frequency of the gas chamber 22 to improve the efficiency of the oscillating water column system.

Naturally, the principal of the present invention remaining the same, the embodiments and constructive details may vary considerably from those described and represented for illustration purposes and in a non-limiting sense, without thereby departing from the scope of the present invention as defined in the accompanying claims.

For example, by way of illustration, in light of the teachings of this document it would be obvious for a person skilled in the art that the turbine means could comprise up-wind or down-wind turbines, as well as any number of blades, not being limited to three blades as shown for illustration purposes.

Also for purposes of illustration, although the present document refers to "cables" used to connect the downward impelling means and the flotation base, a person skilled in the art will understand that instead of cables these can be chains, rods, slings or the like, without thereby departing from the scope of the invention.

Also for purposes of illustration, a person skilled in the art in view of the teachings of the present document will find it obvious that the lateral extensions referred to herein as "arms" can be coupled or even integrated in a lateral extension in the form of a continuous crown or as crown arcs, or in any other type of structure, without thereby departing from the scope of the invention. Similarly, it will be obvious for a person skilled in the art in view of the teachings of the present document that although essentially circular shapes are preferred for many of the elements comprised in the invention such as the shafts, hollow bodies or boxes, many other shapes are possible without departing from the scope of the invention, such as square or rectangular shapes, or regular and irregular polygons.

Known techniques may be used to regulate the volume and/or weight of the ballast material of the massive elements, such as those analogous to that used in submarines to control depth.

## Claims

1. Floating substructure for wind turbine, **characterised in that** it comprises:
- a flotation base including at least one essentially hollow body selectively fillable with ballast, where the maximum horizontal dimension of the flotation base is greater than the maximum vertical dimension of the flotation base,
- a telescopic shaft, supported by said flotation base, comprising at least two segments, including a base segment and a head segment,
- downward impelling means, and
- at least three retaining cables, the corresponding upper ends thereof being attached to said flotation base, preferably at peripheral positions of the flotation base, and the corresponding lower ends thereof being attached to said downward impelling means, such that said retaining cables are taut and exert on said flotation base a downward force;
and **in that** in the installed condition either said shaft is semi-emerged and said flotation base is submerged, or said shaft is emerged and said flotation base is semi-submerged.

2. Floating substructure for wind turbine according to claim 1, **characterised by** comprising at least one stay the upper end of which is joined to the telescopic shaft and the lower end of which is joined to the flotation base, and in that at least one of said stays is inclined with respect to the vertical such that the lower end of the stay is farther from the central vertical axis of the shaft than the upper end of the stay.

3. Floating substructure according to claim 2, **characterised in that** at least one of said stays is formed by the prolongation of a corresponding retaining cable, in which case the flotation base comprises at least one deflection element that allows bending the alignment of the retaining cable and the upper end of the retaining cable is finally attached to the shaft; and **characterised in that** said deflection element is farther from the central vertical axis of the shaft than said upper end of the retaining cable

4. Floating substructure for a wind turbine according to any of the preceding claims, **characterised in that** the flotation base is a structure that comprises a single body, essentially closed, in the form of a box.

5. Floating substructure for a wind turbine according to any of claims 1 to 3, **characterised in that** the flotation base is a structure comprising at least two essentially box-like closed bodies, said bodies joined to each other directly or by means of a structure.

6. Floating substructure for a wind turbine according to claim 5, **characterised in that** said structure is a lattice or bar type structure.

7. Floating substructure for a wind turbine according to any of claims 4 to 6, **characterised in that** at least one of said essentially closed box-like bodies is substantially made from concrete.

8. Floating substructure for a wind turbine according to any of the preceding claims, **characterised in that** the central vertical axis of the telescopic shaft coincides with the central vertical axis of the flotation base.

9. Floating substructure for a wind turbine according to any of the preceding claims, **characterised in that** said flotation base comprises means for regulating the volume and/or weight of ballast admitted inside at least one of said essentially hollow bodies.

10. Floating substructure for a wind turbine according to claim 9, **characterised in that** said essentially hollow body is divided into compartments and **in that** said regulation means comprise an independent regulation device for at least one of said compartments.

11. Floating substructure for a wind turbine according to any of the previous claims, **characterised in that** said downward impelling means comprise attachment means to the seabed.

12. Floating substructure for a wind turbine according to claim 11, **characterised in that** such attachment means comprise driven piles, anchored micropiles, anchored bulbs of hardening material or anchored suction buckets which can resist the upward force transmitted to them by the retaining cables.

13. Floating substructure for a wind turbine according to claim 11, **characterised in that** said attachment means comprise at least one massive element resting on the seabed that can resist, due to its own weight, the upward force applied to it by the retaining cables.

14. Floating substructure for a wind turbine according to claim 13, **characterised in that** said resting massive element comprises at least one essentially hollow, concrete box, fully or partially fillable with ballast material.

15. Floating substructure according to claim 14, **characterised in that** said massive element comprises means for regulating the volume and/or weight of ballast contained therein.

16. Floating substructure according to any of claims 13 to 15, **characterised in that** at least one of said massive elements is self-buoyant in an unballasted condition or in at least one partially ballasted condition.

17. Floating substructure for a wind turbine according to any of the preceding claims, **characterised in that** at least one of said massive elements can be provisionally abutted to the flotation base.

18. Floating substructure for a wind turbine according to any of the preceding claims, **characterised in that** it comprises means for provisional collection of the retaining cables.

19. Floating substructure for a wind turbine according to any of the preceding claims, **characterised in that** it comprises at least one extensor arm projected laterally outward from the perimeter of the body or of the group of bodies of the flotation base and **in that** at least one of said retaining cables is attached by their upper end to a corresponding extensor arm.

20. Floating substructure for a wind turbine according to claim 19, **characterised in that** at least one of the stays is attached at its lower end to a corresponding extensor arm.

21. Floating substructure for a wind turbine according to claim 19, **characterised in that** at least one of said stays is formed by the prolongation of a corresponding retaining cable, and **in that** the extensor arm comprises a deflection element that allows bending the alignment of the retaining cable and the upper end of the retaining cable is finally attached to the shaft; and **characterised in that** said deflection element is farther from the central vertical axis of the shaft than said upper end of the retaining cable

22. Floating substructure for a wind turbine according to any of the preceding claims, **characterised in that** it comprises under the flotation base at least one pressurised gas chamber contained in a enclosure, and **in that** said enclosure is open on the bottom such that it is connected to the body of water of the site.

23. Floating substructure for a wind turbine according to claim 22, **characterised in that** it comprises means for controlling and regulating the volume and/or pressure of the gas contained in said pressurised gas chamber.

24. Floating substructure for a wind turbine according to any of claims 22 and 23, **characterised in that** it comprises in the flotation base means for harnessing energy from waves, which include at least one Wells type turbine on an air passage through the bottom side of the flotation base, communicating the essentially sealed internal enclosure of the flotation base and/or the shaft with said pressurised gas chamber.

25. Installation method for a floating substructure for a wind turbine according to any of the previous claims, **characterised in that** it comprises the following steps in any order technically possible:
a) manufacturing the flotation base on-shore or in-shore,
b) dry manufacturing the telescopic shaft, including at least one base segment and one head segment,
c) forming on-shore or in-shore a transport unit, buoyant and free standing, that comprises the flotation base, the telescopic shaft in the retracted condition and at least part of the wind turbine means joined to the head segment of said telescopic shaft, according to the following sub-steps:
c1) placing the telescopic shaft in retracted condition on the flotation base,
c2) attaching at least part of the wind turbine means to the head segment,
c3) attaching the extensor arms, if applicable, to the flotation base,
c4) attaching the stays, if applicable, to the flotation base,
c5) attaching the wave energy harness means, if applicable, to the flotation base,
d) transporting or towing said buoyant and free-standing transport unit in a self-buoyant manner to the site, the flotation base remaining semi-submerged and the telescopic shaft in a retracted condition remaining fully emerged during transport,
the installation method according to the present invention also being **characterised in that** it comprises, after step a) and/or after the fabrication or construction of the downward impelling means, in an indifferent order, the steps:
e) attaching one end of each of the retaining cables to the flotation base,
f) attaching the other end of each of the retaining cables to said downward impelling means,
the installation method according to the present invention also **characterised in that** it comprises, before step d), the step:
g) placing the flotation base on the body of water at the site;
the installation method according to the present invention also **characterised in that** it comprises, after steps e) and f), the step:
h) applying by the retaining cables a downward force on the flotation base; this force being generated by the impelling means;
the installation method according to the present invention also **characterised in that** it comprises, after step c) and preferably before step h), the step:
i) extending the telescopic shaft together with the wind turbine means;
the installation method according to the present invention also **characterised in that** it comprises, after step d), the step:
j) attaching to the substructure, if applicable, the means for maintaining the lateral position; and
the installation method according to the present invention also **characterised in that** it comprises, before step h), the step:
k) attaching to the seabed, if applicable, the attachment means to the seabed.

26. Installation method according to claim 25, **characterised in that** at least one of said abuttable massive elements forms part of the transport unit and is transported together with the flotation base and the telescopic shaft, and once at the site it is ballasted and let down from the flotation base until it reaches the weight and position required for the installed condition of the substructure.

27. Installation method according to any one of claims 25 to 26, **characterised in that** it also comprises, after step c) and before step h), the step:
m1) provisionally attaching flotation stabiliser means to the floating substructure; and **in that** it also comprises, after step h) and after step I), the step:
m2) removing the flotation stabiliser means from the floating substructure.

28. Installation method according to claim 27, **characterised in that** said flotation stabiliser means comprise:
- at least three floats attached to the flotation base at a relatively fixed position, each float having sufficient height to remain always partially emerged throughout step I), and/or
- at least two floats connected to the flotation base by launching means that are extended as the depth of the flotation base descends during step I), each float having a buoyancy such that it remains at the surface throughout step I), and/or
- at least one barge connected to the flotation base by launching means that are extended as the depth of the flotation base descends during step I), each barge having a buoyancy such that it remains at the surface throughout step I), and/or
- at least one support vessel equipped with launching means that attach the vessel to the flotation base.

29. Installation method according to any one of claims 25 to 28, **characterised in that** it also comprises, before step h), the steps:
n1) manufacturing on-shore or in-shore at least one concrete box with the downward impelling means and placing it in the body of water of the site,
n2) transporting or towing said concrete box in a self-buoyant manner to the site,
n3) ballasting said concrete box such that it is submerged to its operational depth;
and **characterised in that** it also comprises, after step n3), the step:
n4) ballasting said concrete box such that its weight increases to the value desired for the installed condition.

30. Installation method according to any one of claims 25 to 29, **characterised in that** it also comprises, before step h), the step:
o) placing on the flotation base traction means for the retaining cables;
such that the installation method according to the present invention can also comprise in step h):
actuating said traction means for the retaining cables to vertically move the flotation base.

31. Installation method according to any one of claims 25 to 30, **characterised in that** at least one of the steps of the method uses at least two tug boats to control the horizontal position of the floating substructure.

32. Installation method according to any one of claims 25 to 31, **characterised in that** step i) of the installation method according to the present invention is divided into two steps:
- a first step of partial extension of the telescopic shaft after step c), and
- a second step of full extension of the telescopic shaft after starting step h).

33. Installation method according to any one of claims 25 to 32, **characterised in that**, if step c2) includes the installation on the head segment of only part of the wind turbine means, the method also comprises after starting step d) the step:
p) assembling on the head segment all the wind turbine means.

34. Installation method according to any one of the previous claims, **characterised in that**, in the installed condition of the substructure, the flotation base is completely submerged and the shaft is partially submerged.

35. Wind turbine using a floating substructure according to any of claims 1 to 27.

36. Wind turbine using a floating substructure installed by a method according to any of claims 25 to 33.

37. Floating substructure for wind turbine, **characterised in that** it comprises:
- a flotation base comprising at least one essentially hollow body selectively fillable with ballast.
- a telescopic shaft, supported by said flotation base, comprising at least two segments, including a base segment and a head segment,
- downward impelling means, and
- at least three retaining cables, the corresponding upper ends thereof being attached to said flotation base, preferably at peripheral positions of the flotation base, and the corresponding lower ends thereof being attached to said downward impelling means, such that said retaining cables are taut and exert on said flotation base a downward force;
and **in that** in the installed condition either said shaft is semi-emerged and said flotation base is submerged, or said shaft is emerged and said flotation base is semi-submerged.
